(19) Europäisches Patentamt / European Patent Office / Office européen des brevets

(11) **EP 2 856 205 B1**

(12) **EUROPÄISCHE PATENTSCHRIFT**

(45) Veröffentlichungstag und Bekanntmachung des Hinweises auf die Patenterteilung:
**20.07.2016 Patentblatt 2016/29**

(21) Anmeldenummer: **13736748.8**

(22) Anmeldetag: **28.05.2013**

(51) Int Cl.:
*G01S 11/12* (2006.01)    *G01S 13/86* (2006.01)

(86) Internationale Anmeldenummer:
**PCT/DE2013/200018**

(87) Internationale Veröffentlichungsnummer:
**WO 2013/178224 (05.12.2013 Gazette 2013/49)**

(54) **VERFAHREN UND VORRICHTUNG ZUR OBJEKTDETEKTION**

METHOD AND DEVICE FOR DETECTING OBJECTS

PROCÉDÉ ET DISPOSITIF DE DÉTECTION D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2012 DE 102012104742**

(43) Veröffentlichungstag der Anmeldung:
**08.04.2015 Patentblatt 2015/15**

(73) Patentinhaber: **Continental Safety Engineering International GmbH**
**63755 Alzenau (DE)**

(72) Erfinder:
• **WESTHOFEN, Daniel**
  **63739 Aschaffenburg (DE)**
• **ZECHA, Stephan**
  **63768 Hösbach (DE)**

(74) Vertreter: **Büchner, Jörg**
**Conti Temic microelectronic GmbH**
**Intellectual Property**
**Sieboldstrasse 19**
**90411 Nürnberg (DE)**

(56) Entgegenhaltungen:
**US-A1- 2004 178 945    US-A1- 2010 007 476**
**US-B1- 6 452 535       US-B1- 6 834 232**

• **SUGIMOTO S ET AL: "Obstacle detection using millimeter-wave radar and its visualization on image sequence", PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, LOS ALAMITOS, CA, USA, Bd. 3, 23. August 2004 (2004-08-23), Seiten 342-345, XP010724669, DOI: 10.1109/ICPR.2004.1334537 ISBN: 978-0-7695-2128-2**
• **TAO WANG ET AL: "A Method Integrating Human Visual Attention and Consciousness of Radar and Vision Fusion for Autonomous Vehicle Navigation", SPACE MISSION CHALLENGES FOR INFORMATION TECHNOLOGY (SMC-IT), 2011 IEEE FOURTH INTERNATIONAL CONFERENCE ON, IEEE, 2. August 2011 (2011-08-02), Seiten 192-197, XP031934563, DOI: 10.1109/SMC-IT.2011.15 ISBN: 978-1-4577-0712-4**

**Beschreibung**

Die Erfindung betrifft ein Verfahren sowie eine Vorrichtung zur Objektdetektion mittels Bildverarbeitung in mittels einer Fahrzeugkamera erfassten Bildern einer Fahrzeugumgebung.

Aus dem Stand der Technik ist es bekannt mittels einer oder mehrerer an einem Fahrzeug angeordneten Kameras, Objekte in der Fahrzeugumgebung zu detektieren. Darunter fällt insbesondere die Erkennung von bewegten oder unbewegten Gefahrenobjekten, z.B. Hindernisse im Fahrweg des Fahrzeugs, von Fußgängern, anderen Fahrzeugen und weiteren Verkehrsteilnehmern. Die Detektion von Objekten erfolgt dabei durch Auswertung der mittels Kameras erfassten Bilder, z.B. aus der in Fahrtrichtung des Fahrzeugs vorausliegenden Fahrzeugumgebung, mittels Bildverarbeitungsverfahren, beispielsweise über Mustererkennungs- oder Mustervergleichsverfahren. Zudem ist auch die Erkennung beispielsweise von Fahrspurbegrenzungen (Fahrspurmarkierungen) und Verkehrszeichen als Objekte in der Fahrzeugumgebung mittels Kameras und geeigneter Bildverarbeitungsverfahren bekannt.

Die EP 1 179 803 B1 zeigt beispielsweise eine Objekterkennungsvorrichtung zur Erkennung von Objekten in Bildern, die von mehreren Kameras aus einer Fahrzeugumgebung gewonnen werden. Die Objekterkennung erfolgt dabei über einen Abgleich der Bilder mit Daten über Modelle und Merkmalvektoren von Modellen, die vorab in einer Merkmalvektordatenbank gespeichert wurden.

In Abhängigkeit der Objektedetektion ist es möglich in Fahrzeugen verschiedene Fahrerassistenzfunktionen zu realisieren. Unter Fahrerassistenzfunktionen können in dem Zusammenhang alle bekannten Fahrerassistenzsysteme verstanden werden, die mit Informationen über detektierte Objekte in der Fahrzeugumgebung arbeiten. Darunter fallen insbesondere verschiedene Funktionen zur Regelung bzw. Steuerung fahrzeugseitiger Systeme, z.B. des Fahrzeuglichts, sowie Funktionen zur autonomen oder teilautonomen Längs- und/oder Querregelung des Fahrzeugs, z.B. Bremsassistent (BAS), Tempomat (Geschwindigkeitsregelanlage), Abstandsregeltempomat, Adaptive Cruise Control (ACC), Abstandswarner, Stauassistent, Spurerkennungssystem, Spurhalteassistent/Spurassistent, Querführungsunterstützung (*lane departure warning*), Spurhalteunterstützung (*lane keeping support*), Spurwechselassistent (*lane change assistance*), Spurwechselunterstützung (*lane change support*), Intelligent Speed Adaption (ISA), Einparkhilfe. Weiterhin können in Abhängigkeit der Objektdetektion verschiedene aktive und/oder passive Sicherheitsfunktionen im Fahrzeug realisiert werden, die dem Schutz von Fahrzeuginsassen und anderer Verkehrsteilnehmer, beispielsweise Fußgänger, dienen können, z.B. ein Notbremsassistent, Systeme zur Durchführung von autonomen Ausweichmanövern, Warneinrichtungen, Airbags für Fahrzeuginsassen, Fußgängerairbags, aufstellbare Motorhaube etc.

Um den im Rahmen der Objektedetektion für die Bildverarbeitung erforderlichen Rechenaufwand gering zu halten bzw. um Rechenleistung zu sparen, ist es aus dem Stand der Technik weiterhin bereits bekannt, vorab einen Suchbereich innerhalb der Bilder zu bestimmen, in dem sich ein Objekt mit großer Wahrscheinlichkeit befinden wird. D. h. es wird vorab ein bestimmter Bildausschnitt innerhalb des Gesamtbildes festgelegt und nur innerhalb dieses Bildausschnitts eine Objektdetektion mittels Bildverarbeitung durchgeführt. Dieser Suchbereich bzw. der Bildausschnitt wird in der Regel auch als Region-Of-Interest bezeichnet und mit ROI abgekürzt.

Die EP 2 161 677 zeigt hierzu beispielsweise ein Verfahren in mittels einer Fahrzeugkamera erfassten Bilder, bei dem zunächst ein Objekt und dessen genaue Position mittels einer Objekterfassungseinrichtung erfasst werden, in Abhängigkeit des erfassten Objekts und dessen Position weiterhin vorab ein Suchbereich (ROI) in den erfassten Bildern bestimmt wird und die Objektdetektion mittels Bildverarbeitung nur innerhalb des Suchbereichs (ROI) in den erfassten Bildern erfolgt.

Die US 2010/0007476 A1 bzw. deren WO 2006/015894 A1 zeigen ein Verfahren zur Objekterkennung basierend auf einem Fernbereichs-Radarsensor, welcher Abstand und Winkellage eines Objekts erfasst und einer Fahrzeugkamera einen entsprechend an diese Informationen angepasste Ausrichtung eines Suchbereichs (ROI) ermöglicht.

Nachteilig bei den aus dem Stand der Technik bekannten Verfahren ist allerdings die Tatsache, dass für die Bestimmung des Suchbereichs (ROI) im Bild die genaue Position des Objekts bekannt sein muss, d.h. dessen eindeutige Position relativ zum Fahrzeug. Hierzu müssen aufwändige Ortungsverfahren eingesetzt werden, beispielsweise Winkelschätzverfahren. Derartige Verfahren erfordern einen hohen Rechenaufwand und sind zudem nicht immer zuverlässig. Das kann zu Fehlfunktionen bei Fahrerassistenzsystemen und Sicherheitseinrichtungen im Fahrzeug führen, die in Abhängigkeit der Objektdetektion arbeiten.

Darüber hinaus sind grundsätzlich transponderbasierte Objekterkennungsverfahren bekannt, bei welchen in der US 6,452,535 beispielsweise ein transpondertragendes Objekt erkannt und dessen Position und Relativgeschwindigkeit vom Fahrzeug ermittelt und daraus die Signale anderer Sensoren plausibilisiert werden. Transponderbasierte Objekterkennungsverfahren, welche die Position des Objekts erkennen können sollen, bedürfen jedoch entweder aufwändiger Antennentechnik mit einer Mehrzahl von Antennen zur Ermittlung der Position des Objekts mittels Triangulation oder Transpondern, welche einen GPS-Empfänger mitführen und so GPS-Daten des Objekts via Transponder übermitteln. Eine deutlich einfachere reine Laufzeitmessung auf Transponderbasis liefert jedoch nur einen reinen Abstand ohne Winkelinformation.

Der Erfindung liegt demnach die Aufgabe zugrunde, ein Verfahren anzugeben, mit dem sich auf einfache und zuverlässige Weise ein Suchbereich (ROI) in einem Bild bestimmen lässt, insbesondere ohne aufwändige bzw. eindeutige Positionsbestimmung des Objekts.

Diese Aufgabe wird durch ein Verfahren sowie durch eine Vorrichtung mit den Merkmalen der unabhängigen Ansprüche gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung besteht darin, für die Erfassung eines Objekt und dessen Position, eine technisch relativ einfache Objekterfassungseinrichtung zu verwenden, insbesondere ein einfaches transponderbasiertes Ortungssystem, bei dem lediglich eine Information über die Entfernung eines Objekts gewonnen wird, sowie insbesondere optional eine Objektklasseninformation. Die Objektentfernungsinformation wird darauf an die Bildverarbeitung übergeben, die in Abhängigkeit der Objektentfernungsinformation einen Suchbereich (ROI) innerhalb der mittels einer oder mehrerer Kameras erfassten Bilder einer Fahrzeugumgebung ermittelt. Innerhalb dieses Suchbereichs (ROI) kann anschließend die Objektdetektion mittels Bildverarbeitung erfolgen, z.B. mittels Mustererkennungs- bzw. Mustervergleichsverfahren. Da von der Objekterfassungseinrichtung vorzugsweise ausschließlich eine Objektentfernung gewonnen wird, kann der Suchbereich (ROI) zunächst vergrößert sein und sich insbesondere in horizontaler Richtung über den gesamten Bildbereich erstrecken. Nach erstmaliger Detektion des Objekts mittels der Bildverarbeitung im vergrößerten Suchbereich (ROI) kann jedoch eine Information über den Objektwinkel direkt aus der Bildverarbeitung gewonnen werden, worauf der Suchbereich (ROI), beispielsweise für eine weitere Objektdetektion z.B. zur Objektverfolgung oder zur Bestimmung eines Kollisionsrisikos, weiter eingegrenzt werden kann. Gemäß einer besonderen Ausgestaltung der Erfindung wird zusätzlich zur Objektentfernung eine Objektklasse aus der Objekterfassungseinrichtung gewonnen und für die Bestimmung des Suchbereichs (ROI) verwendet.

Ein wesentlicher Vorteil des erfindungsgemäßen Verfahrens gegenüber den aus dem Stand der Technik bekannten Verfahren besteht darin, dass für die Bestimmung des Suchbereichs (ROI) bevorzugt nur die Entfernung eines Objekts ermittelt wird, insbesondere mittels eines transponderbasierten Ortungssystems als Objekterfassungseinrichtung. Bei einem derartigen System handelt es sich um ein technisch relativ einfaches gleichzeitig aber sehr zuverlässiges System zur Positionsbestimmung von Objekten. Durch die Verwendung eines transponderbasierten Ortungssystems ist zudem die Erfassung von Objekten auch bei teilweiser und vollständiger Verdeckung und/oder bei schlechten Sichtverhältnissen möglich. Dies bietet erhebliche Vorteile gegenüber einer Objekterfassung und Positionsbestimmung beispielsweise mittels Radar, Lidar oder Stereokamera. Weiterhin sind bei dem vorgeschlagenen Verfahren für die Bestimmung des Suchbereichs (ROI) im Kamerabild keine aufwändigen Winkelschätzverfahren notwendig bzw. es ist keine genaue Positionsbestimmung vorab für die Bestimmung des Suchbereichs (ROI) erforderlich. Die genaue Position bzw. die Winkelinformation eines Objekts wird nach der Bestimmung des Suchbereich (ROI) und aus der Objektdetektion mittels Bildverarbeitung gewonnen. Die Winkelschätzung mittels Kamera bzw. Bildverarbeitung ist gegenüber der Winkelschätzung aus Transpondersystemen oder anderen Objekterfassungseinrichtungen, die bei den aus dem Stand der Technik bekannten Verfahren zur eindeutigen Positionsbestimmung eines Objekts eingesetzt werden, erheblich genauer und zuverlässiger. Mittels des erfindungsgemäßen Verfahrens kann somit die Zuverlässigkeit und die Robustheit der Objektdetektion gegenüber Fehlauslösungen erhöht werden, insbesondere durch Kombination bzw. Fusion der Entfernungsinformation, aus der Objekterfassung mittels der Objekterfassungseinrichtung, mit der Winkelinformation, aus der Objektdetektion mittels Bildverarbeitung. Der Suchbereich (ROI) wird insbesondere zunächst nur basierend auf einer Entfernungsschätzung berechnet bzw. ermittelt. Nach anschließender erstmaliger Detektion des Objekts im Kamerabild und gemäß des Winkels aus der Bildverarbeitung kann der Suchbereich (ROI) dann verkleinert werden. Somit ist eine Winkelschätzung mittels der Objekterfassungseinrichtung überflüssig.

Unter dem Begriff Objektdetektion, d.h. unter der Detektion (Erfassung) von Objekten mittels Bildverarbeitung in mittels einer oder mehreren Kameras erfassten Bildern aus einer Fahrzeugumgebung, kann im Rahmen des erfindungsgemäßen Verfahrens neben der reinen Erkennung bzw. Ermittlung von Objekten, z.B. mittels Mustererkennungs- und/oder Mustervergleichsverfahren, weitergehend die Validierung (Objektvalidierung) bzw. die Bestätigung eines Objekts und/oder dessen Objektlasse verstanden werden, beispielsweise wenn ein Objekt, sowie optional dessen Objektklasse, vorab von einer Objekterfassungseinrichtung ermittelt wurde. Weiterhin kann unter der Objektdetektion auch die Prädikation eines Objekts (Objektprädikation), d.h. zum Beispiel die Vorhersage bzw. die Abschätzung der künftigen Objektbewegung verstanden werden, d.h. eine Bestimmung von möglichen zukünftigen Aufenthaltsorten eines Objekts, insbesondere relativ zum Fahrzeug bzw. zum künftigen Fahrweg des Fahrzeugs. Die Objektprädikation kann beispielsweise der Ermittlung eines Kollisionsrisikos dienen. Unter der Objektdetektion kann zudem die Verfolgung (Objektverfolgung, Tracking) eines Objekts verstanden werden, d.h. eine über die reine Erkennung eines Objekts hinausgehende Beobachtung des Objekts in weiteren erfassten Bildern, z.B. ebenfalls zur fortlaufenden Ermittlung der Objektbewegung und/oder eines Kollisionsrisikos.

Unter dem Begriff Objekt, kann im Rahmen des erfindungsgemäßen Verfahrens jedes für die Umsetzungen von Funktionen eines oder mehrerer Fahrerassistenzsysteme interessierende Objekt in der Umgebung eines Fahrzeugs verstanden werden. Zu den interessierenden Objekten gehören insbesondere verschiedene Verkehrsteilnehmer wie Fahrzeuge und Fußgänger. Zu den Objekten können jedoch auch Objekte wie Fahrspurmarkierungen bzw. Fahrspurbegrenzungen, Hindernisse und Verkehrszeichen gehören.

Unter dem Begriff Objektklasse ist insbesondere eine Klasse von mehreren definierten Objektklassen zu verstehen, welche ähnliche Objekte, z.B. ähnlich vom Typ bzw. ähnlich von der Art, in einer Gruppe zusammenfassen. Die Objektklassen können insbesondere hierarchisch strukturiert sein und Unterklassen umfassen. Als Objektklassen können beispielsweise die Objektklassen "Fußgänger" und "Fahrzeug" definiert sein, wobei die Objektklasse "Fahrzeug" beispielsweise die Unterklassen "Zweirad", "Personenkraftwagen" und "Lastkraftwagen" umfassen kann.

Unter der Objektentfernung ist im Rahmen des erfindungsgemäßen Verfahrens insbesondere der räumliche Abstand bzw. die geradlinige Distanz zwischen dem Fahrzeug, in dem das erfindungsgemäße Verfahren zum Einsatz kommt, und dem jeweiligen Objekt zu verstehen.

Bei dem erfindungsgemäßen Verfahren handelt es sich um ein Verfahren zur Objektdetektion mittels Bildverarbeitung. Das Verfahren kann beispielsweise bei einer Objektdetektion für eines oder mehrere Fahrerassistenzsysteme bzw. für aktive und passive Sicherheitssysteme eines Fahrzeugs zum Einsatz kommen. Die Objektdetektion erfolgt im Rahmen des erfindungsgemäßen Verfahrens insbesondere mittels Bildverarbeitung in mittels mindestens einer Fahrzeugkamera erfassten Bildern, insbesondere aus einer Fahrzeugumgebung. Dabei können auch mehrere Bilder, die von zwei oder mehr Kameras mit unterschiedlicher Anordnung und Ausrichtung erfasst wurden, zu einem Gesamtbild der Fahrzeugumgebung zusammengesetzt werden, d.h. zu einer sogenannten Topview- bzw. 360°-Darstellung, und es kann das Gesamtbild der Fahrzeugumgebung mittels des erfindungsgemäßen Verfahrens zur Objektdetektion verarbeitet werden.

Im Rahmen des erfindungsgemäßen Verfahrens wird dabei, insbesondere in einem ersten Schritt, ein Objekt und dessen Position mittels einer Objekterfassungseinrichtung erfasst. Bei der Objekterfassungseinrichtung handelt es sich dabei bevorzugt um eine Erfassungseinrichtung, die zusätzlich zu der mindestens einen Fahrzeugkamera, mittels der die Bilder der Fahrzeugumgebung für die Bildverarbeitung erfasst werden, im bzw. am Fahrzeug angeordnet ist. Als Objekterfassungseinrichtung kann dabei grundsätzlich jede aus dem Stand der Technik bekannte Einrichtung eingesetzt werden, die in der Lage ist eine Information insbesondere über eine Objektposition, z.B. eine Objektentfernung, zu ermitteln. Die Objekterfassungseinrichtung kann zusätzlich auch in der Lage sein, bereits eine Objektklasse zur ermitteln. Die Objektklassifikation erfolgt erfindungsgemäß bevorzugt mittels Bildverarbeitung, insbesondere durch Überprüfung des Suchbereichs (ROI) in den mittels der mindestens einen Fahrzeugkamera erfassten Bildern, beispielsweise auf verschiedene Objektklassen hin. Bei der Objekterfassungseinrichtung handelt es sich vorzugsweise um eine transponderbasierte Objekterfassungseinrichtung, wobei das erfindungsgemäße Verfahren in dem Fall insbesondere zur Objektdetektion von Fußgängern und Fahrzeugen eingesetzt werden kann, die mit einem entsprechenden Transpondersystem ausgerüstet sind.

Weiterhin wird im Rahmen des erfindungsgemäßen Verfahrens, insbesondere in einem zweiten Schritt, in Abhängigkeit des erfassten Objekts und dessen Position vorab ein Suchbereich (ROI) in den mittels der mindestens einen Fahrzeugkamera erfassten Bildern bestimmt. Bei dem Suchbereich (ROI) handelt es sich dabei bevorzugt um einen Ausschnitt des Gesamtbildes der Fahrzeugumgebung in dem sich, basierend auf den Informationen der vorangegangenen Objekterfassung, das Objekt voraussichtlich bzw. mit hoher Wahrscheinlichkeit befinden und somit mittels Bildverarbeitung detektieren lassen wird.

Im Weiteren erfolgt im Rahmen des erfindungsgemäßen Verfahrens, insbesondere in einem dritten Schritt, eine Objektdetektion mittels Bildverarbeitung innerhalb des vorab bestimmten Suchbereichs (ROI), insbesondere mittels Bildverarbeitungsverfahren, wie Mustererkennungs- und/oder Mustervergleichsverfahren.

Erfindungsgemäß wird bei der Erfassung des Objekts und dessen Position, insbesondere ausschließlich, eine Information über eine Objektentfernung mittels der Objekterfassungseinrichtung erfasst. Weiterhin erfolgt die Bestimmung des Suchbereichs (ROI), vorzugsweise ausschließlich, in Abhängigkeit der Objektentfernungsinformation.

Gemäß einer vorteilhaften Ausgestaltung des erfindungsgemäßen Verfahrens wird bei der Erfassung des Objekts und dessen Position zusätzlich eine Information über eine Objektklasse mittels der Objekterfassungseinrichtung erfasst. Die Bestimmung des Suchbereichs (ROI) erfolgt dabei vorzugsweise in Abhängigkeit der Objektentfernungsinformation und zusätzlich in Abhängigkeit der Objektklasseninformation, insbesondere ausschließlich in Abhängigkeit dieser beiden Informationen. Aus der Objektklasseninformation können beispielsweise die zu erwartende Objektgröße bzw. Objektausdehnung und/oder die erwartende und/oder maximal mögliche Bewegungsgeschwindigkeit des Objekts bestimmt werden. In Abhängigkeit der so bestimmten Objektausdehnung und/oder der Bewegungsgeschwindigkeit lässt sich der Suchbereich (ROI) anpassen, d.h. z.B. bei kleiner Objektausdehnung und/oder geringer möglicher Bewegungsgeschwindigkeit ein kleinerer Suchbereich (ROI) und im umgekehrten Fall ein größerer Suchbereich (ROI). Weiterhin kann, insbesondere mittel der Objekterfassungseinrichtung oder mittels Bildverarbeitung eine Objektausrichtung bestimmt und in Abhängigkeit der bestimmten Objektausrichtung der Suchbereich (ROI) angepasst werden. Ein Objekt im Längsverkehr, d.h. beispielsweise ein Fahrzeug, welches den Fahrweg des eigenen Fahrzeugs kreuzt, erfordert in der Regel eine größeren Suchbereich (ROI), als ein Objekt, dass sich parallel zum Eigenfahrzeug bewegt, d.h. beispielsweise ein entgegenkommendes oder ein vorausfahrendes Fahrzeug. Die Informationen über die Objektentfernung und Objektklasse können insbesondere genutzt werden, um einen Skalierungsfaktor des Objekts im Bild zu berechnen sowie um daraus einen Suchbereich (ROI), z.B. dessen Größe/Ausdehnung, festzulegen. Dies ist insbesondere vorteilhaft gegenüber einer Bildverarbeitung im gesamten Bild mit verschiedenen Skalierungsfaktoren.

Gemäß einer weiteren vorteilhaften Ausgestaltung des erfindungsgemäßen Verfahrens erfolgt die Bestimmung des Suchbereichs (ROI) mittels homographischer Transformation der Objektentfernungsinformation. Unter homographischer Transformation (oder auch: Homographie) ist allgemein die Kollineation des 2-dimensionalen reellen projektiven Raumes auf sich selbst zu verstehen, wobei diese Transformation auch als Projektive Transformation bezeichnet wird. Im Rahmen des erfindungsgemäßen Verfahrens erfolgt insbesondere eine Transformation der mittels eines Transpondersystems ermittelten Objektposition bzw. dessen Koordinaten (x, y) in Pixel-Koordinaten (x', y') der erfassten Bilder. Die entsprechende homographische Transformation kann dabei insbesondere gemäß der folgenden Gleichung erfolgen:

$$\begin{bmatrix} x' \\ y' \\ 1 \end{bmatrix} = \frac{1}{b_{31} \cdot x + b_{32} \cdot x} \cdot \begin{bmatrix} b_{11} & b_{12} & b_{13} \\ b_{21} & b_{22} & b_{23} \\ b_{31} & b_{32} & 1 \end{bmatrix} \cdot \begin{bmatrix} x \\ y \\ 1 \end{bmatrix}$$

Gemäß des erfindungsgemäßen Verfahrens wird aus der Objektdetektion, d.h. insbesondere aus der Objektdetektion mittels Bildverarbeitung innerhalb des Suchbereichs (ROI) eine Objektwinkelinformation gewonnen, insbesondere zusätzlich zu den mittels der Objekterfassungseinrichtung gewonnenen Informationen über Objektentfernung und Objektklasse.

Gemäß einer weiteren bevorzugten Ausgestaltung des erfindungsgemäßen Verfahrens werden die Objektklassen-, die Objektentfernungs- und die Objektwinkelinformation zu einer Zielobjektinformation (Track) fusioniert, insbesondere zur weiteren Objektdetektion, beispielsweise zur Objektverfolgung (Tracking) und/oder zur Objektprädikation. Die Zielobjektinformation kann weiterhin zur Schätzung der Ausrichtung eines Objektes verwendet werden, wobei in Abhängigkeit der Ausrichtung, wie vorangehend beschrieben, eine Anpassung des Suchbereichs (ROI) erfolgen kann. Durch die Fusion der verschiedenen Informationen kann eine besonders rechenzeitgünstige Verfolgbarkeit eines Objekt, beispielsweise eines Fußgängers, erreicht werden, insbesondere durch Verkleinerung des Suchbereichs sobald das Objekt erstmalig bei der Objektdetektion mittels Bildverarbeitung erfasst wurde.

Gemäß einer besonderen Ausgestaltung des erfindungsgemäßen Verfahrens umfasst die Objektdetektion mittels Bildverarbeitung innerhalb des Suchbereichs (ROI) eine Objektvalidierung. Die Objektvalidierung dient dabei insbesondere zur Validierung (Bestätigung), ob das mittels der Objekterfassungseinrichtung erfasste Objekt tatsächlich existiert bzw. vorhanden ist, und/oder ob die Objektklasse und/oder die Objektentfernung richtig erfasst wurden. Dadurch können auf vorteilhafte Weise fehlerhafte Objektdetektionen und damit Fehlauslösungen/Fehlfunktionen von Fahrerassistenzsystemen und/oder Sicherheitssystemen vermieden werden.

Gemäß des erfindungsgemäßen Verfahrens erfolgt in Abhängigkeit der Objektwinkelinformation eine Anpassung des Suchbereichs (ROI), insbesondere eine Eingrenzung des Suchbereichs. Die Anpassung des Suchbereichs (ROI) kann dabei den Bildverarbeitungsaufwand bzw. den Rechenaufwand für die Bilderverarbeitung einer weitergehenden Objektdetektion in weiteren mittels der mindestens einen Fahrzeugkamera erfassten Bildern, z.B. im Rahmen einer Objektverfolgung (Tracking) und/oder im Rahmen einer Objektprädikation, auf vorteilhafte Weise zusätzlich reduzieren.

Gemäß des erfindungsgemäßen Verfahrens ist ein erweiterter Suchbereich (ROI) für die Objektdetektion in den mittels der Fahrzeugkamera erfassten Bildern der Fahrzeugumgebung vorgesehen. Unter dem erweiterten Suchbereich kann dabei insbesondere ein Suchbereich (ROI) verstanden werden, der gegenüber einer erforderlichen Größe des Suchbereichs, beispielsweise ermittelbar in Abhängigkeit der Objektklasse und einer daraus bestimmbaren maximalen Objektausdehnung, vergrößert ist. Dies kann dem Ausgleich von Messfehlern und Messungenauigkeiten sowie beispielsweise dem Ausgleich von unterschiedlichen Straßenneigungen sowie von Fahrzeugeigenbewegungen dienen. Der erweiterte Suchbereich kann beispielsweise in horizontaler Richtung auf beiden Seiten jeweils um die Hälfte der erforderlichen Größe erweitert sein und/oder in vertikaler Richtung auf eine bestimmte Pixelgröße hochskaliert werden. Die Festlegung erfolgt bevorzugt in Abhängigkeit vom Skalierungsfaktor, der durch die Entfernungsmessung ermittelt wurde.

Gemäß einer weiteren bevorzugten Ausgestaltung des erfindungsgemäßen Verfahrens ist bei der Objektdetektion innerhalb des Suchbereichs (ROI) bzw. innerhalb des erweiterten Suchbereichs (ROI) ein Detektionsfenster vorgesehen, wobei die Objektdetektion mittels Bildverarbeitung innerhalb des Detektionsfensters erfolgt. Das Detektionsfenster wird dabei bevorzugt im Suchbereich (ROI) bzw. im erweiterten Suchbereich (ROI) bewegt, d.h. ständig bzw. sukzessive verschoben. Dieses Verfahren wird auch als Shifting bezeichnet, bzw. als Sliding Window Verfahren. Das Detektionsfenster wird dabei auch als Sliding Window bezeichnet. Dabei erfolgt die Objektdetektion, z.B. eine Berechnung eines (Objekt-)Klassifikationsergebnisses mittels bilderkennenden Algorithmen, innerhalb des Detektionsfensters und vorzugsweise nicht innerhalb des gesamten Suchbereichs (ROI). Hierbei wird das Detektionsfester beispielsweise mit einem definierten Pixelversatz von Ausgangsposition innerhalb des Suchbereichs (ROI) bzw. innerhalb des erweiterten Suchbereichs (ROI) bewegt. Im Rahmen dieser Ausgestaltung des erfindungsgemäßen Verfahrens dient das Detektionsfenster und insbesondere dessen Bewegung innerhalb des Suchbereichs (ROI) insbesondere dazu, die genaue Position des Objekts im Suchbereich (ROI) zu ermitteln. Für jede Position des Detektionsfensters kann dabei ein Klassifikator durchlaufen und die Wahrscheinlichkeit einer Detektion ermittelt werden. Anschließend können alle Positionen, die über einem definiertem Schwellwert lagen, bzw. deren Wahrscheinlichkeiten über einem definierten Schwellwert lagen, zu sinnvollen Einzeldetektionen, z.B. mittels Non-Maximum-Suppression (NMS), vereinheitlicht werden. Ein Fußgänger als Objekt wird im Rahmen des Sliding Window Verfahrens z.B. nicht nur an Position x0|y0 des Detektionsfensters innerhalb des Suchbereichs (ROI) erkannt, sondern beispielsweise auch bei Position x0+8|y0, x0+16|y0, x0-8|y0, x0-16|-y0, x0|y0+8, x0|y0-8, etc. Ergebnisse die räumlich nahe zusammenliegen, können dabei zu sinnvollen Objekten über die NMS gruppiert werden. Als Pixelversatz kann beispielsweise ein Versatz von 8 Pixeln jeweils in vertikaler und horizontaler Richtung gewählt werden, mit dem die Bewegung des Detektionsfensters erfolgt.

Die erfindungsgemäße Vorrichtung dient zur Durchführung einer Objektdetektion in einer Fahrzeugumgebung, insbesondere nach einem Verfahren gemäß einer der vorangehend beschriebenen Ausgestaltungen. Die Vorrichtung umfasst dabei zumindest eine Objekterfassungseinrichtung zur Erfassung wenigstens der Objektentfernungsinformation zu einzelnen Objekten. Die erfindungsgemäße Vorrichtung umfasst weiterhin zumindest eine Fahrzeugkamera zur Erfassung von Bildern aus der Fahrzeugumgebung.

Die erfindungsgemäße Vorrichtung umfasst weiterhin Bildverarbeitungseinrichtungen zur Objektdetektion in den erfassten Bildern der Fahrzeugumgebung, wobei die Bildverarbeitungseinrichtungen insbesondere derart ausgebildet sind, dass die Objektdetektion innerhalb eines bestimmten Suchbereichs (ROI) in den Bildern der Fahrzeugumgebung erfolgt, wobei der Suchbereich (ROI), insbesondere ausschließlich, in Abhängigkeit der mittels der Objekterfassungseinrichtung gewonnenen Objektentfernungsinformation bestimmt wird. Bei der zumindest einen Objekterfassungseinrichtung handelt es sich erfindungsgemäß um eine transponderbasierte Objekterfassungseinrichtung, mittels der insbesondere nur eine Objektentfernung ermittelt werden kann sowie in besonderer Ausgestaltung zusätzlich eine Objektklasse.

Weitere Vorteile sowie optionale Ausgestaltungen des erfindungsgemäßen Verfahren sowie der erfindungsgemäßen Vorrichtung gehen aus der Beschreibung und den Zeichnungen hervor. Ausführungsbeispiele sind in den Zeichnungen vereinfacht dargestellt und in der nachfolgenden Beschreibung näher erläutert.

Es zeigt

Figur 1:     eine schematische Darstellung eines Ablaufs des erfindungsgemäßen Verfahrens.
Figur 2:     eine schematische Darstellung eines im Rahmen des erfindungsgemäßen Verfahrens aus einer Objektentfernungsinformation bestimmten Suchbereichs (ROI) in einem Bild einer Fahrzeugumgebung.
Figur 3:     eine schematische Darstellung eines im Rahmen des erfindungsgemäßen Verfahrens mittels einer Objektwinkelinformation angepassten Suchbereichs (ROI).

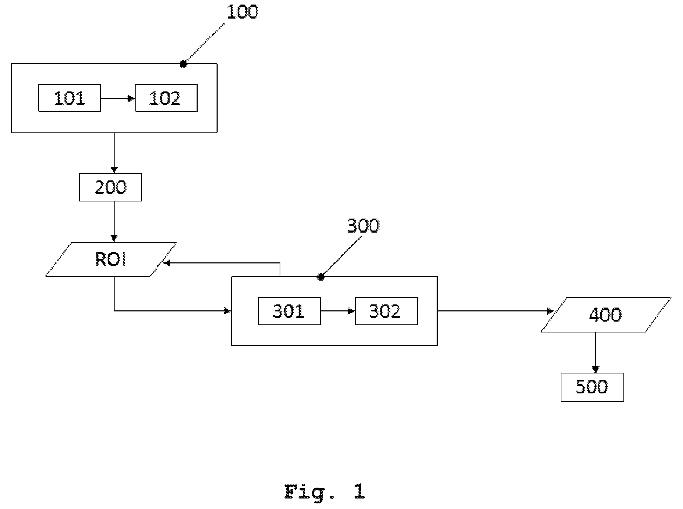

Fig. 1 zeigt schematisch einen bevorzugten Ablauf des erfindungsgemäßen Verfahrens, insbesondere den Ablauf der Datenverarbeitung zur Objektdetektion. Erfindungsgemäß wird zunächst mittels einer Objekterfassungseinrichtung, insbesondere mittels eines transponderbasierten Ortungssystems 100, eine Objektklasseninformation 101 und eine Objektentfernungsinformation 102 eines in der Fahrzeugumgebung vorhandenen Objekts erfasst. Anschließend erfolgt eine Transformation der Objektentfernungsinformation 102 in ein mittels einer Kamera 300 aus der Fahrzeugumgebung erfasstes Bild, insbesondere mittels homographischer Transformation 200. In Abhängigkeit der Objektentfernungsinformation 102, insbesondere mittels homographischer Transformation 200 der Objektentfernung 102 in das Kamerabild, wird somit vorab ein Suchbereich ROI im Kamerabild bestimmt, in dem sich das Objekt mit hoher Wahrscheinlichkeit befinden und somit mittels Bildverarbeitung detektierbar sein wird. Im Rahmen der Bildverarbeitung zur Objektdetektion im Kamerabild kann gemäß Fig. 1 zunächst eine Objektvalidierung 301 erfolgen, insbesondere eine Überprüfung, ob das Objekt tatsächlich existiert und/oder ob dessen Klasse 101 von der Objekterfassungseinrichtung 100 richtig erfasst wurde. Weiterhin kann gemäß Fig. 1 in einem weiteren Schritt der Winkel des Objekts bzw. eine Objektwinkelmessung 302 im Kamerabild erfolgen. Mittels der Information über den Objektwinkel kann der Suchbereich ROI weiter eingeschränkt werden. Hierzu kann gemäß Fig. 1 ein Rückkanal vorgesehen sein, der die Objektwinkelinformation in die Bestimmung des Suchbereichs ROI zurückführt. Dies kann den Bildverarbeitungsaufwand bei einer Weiterverarbeitung 500 der gewonnen Informationen aus der Objektdetektion, beispielsweise im Rahmen einer Objektverfolgung bzw. im Rahmen eines Objekttrackings oder beispielweise einer Kollisionsrisikoermittlung, weiter einschränken. Für die Weiterverarbeitung 500 werden gemäß Fig. 1 zunächst die Objektklasseninformation 101, die Objektentfernungsinformation 102 und die Information über den Objektwinkel aus der Objektwinkelmessung 302 zu einem Track 400 bzw. einer Zielobjektinformation fusioniert.

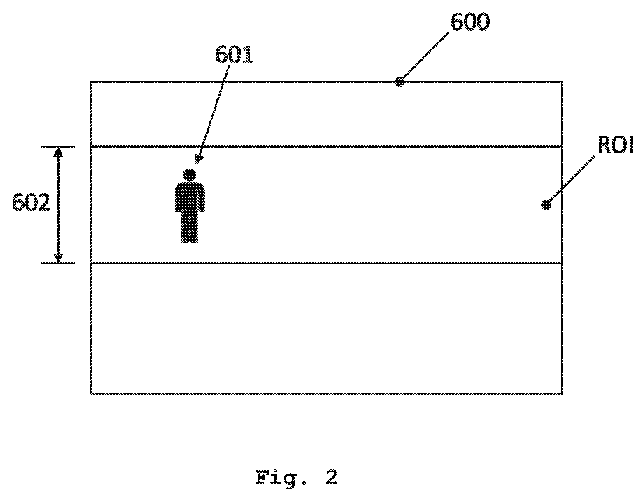

**Fig. 2** zeigt eine schematische Darstellung eines im Rahmen des erfindungsgemäßen Verfahrens aus einer Objektentfernungsinformation **102** bestimmten Suchbereichs **ROI** in einem mittels einer Fahrzeugkamera **300** erfassten Bild **600** einer Fahrzeugumgebung. Bei dem Suchbereich **ROI** handelt es sich in diesem Fall zunächst um einen vergrößerten Suchbereich **ROI,** der sich in horizontaler Richtung über das gesamte Bild **600** erstreckt. Aus der Objektentfernungsinformation **102** wurde dabei, beispielsweise mittels homographischer Transformation **200,** die Position eines Objekts **601,** z.B. eines Fußgängers, in das Kamerabild **600** transformiert. Eine Skalierung, d.h. die Bestimmung der vertikalen Ausdehnung **602** des Suchbereichs **ROI,** kann erfindungsgemäß beispielsweise in Abhängigkeit der Objektentfernungsinformation **102** und/oder der Objektklasseninformation **101** erfolgt sein.

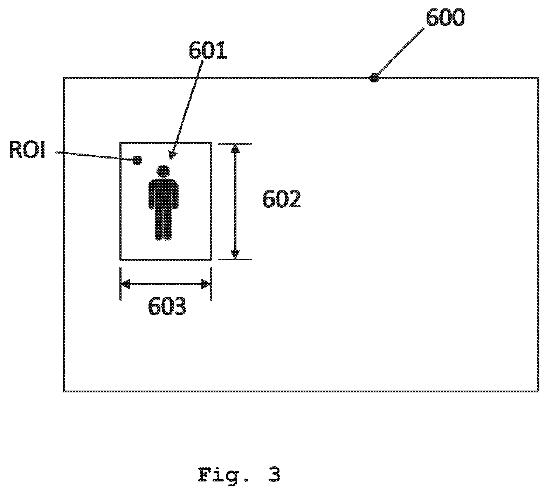

**Fig. 3** zeigt eine weitere schematische Darstellung eines im Rahmen des erfindungsgemäßen Verfahrens aus einer Objektentfernungsinformation **102** bestimmten Suchbereichs **ROI** in einem mittels einer Fahrzeugkamera **300** erfassten Bild **600** einer Fahrzeugumgebung. In diesem Fall handelt es sich bei dem Suchbereich **ROI** um einen gegenüber dem Suchbereich **ROI** aus **Fig. 2** verkleinerten Suchbereich **ROI,** wobei insbesondere dessen horizontale Ausdehnung **603** eingegrenzt wurde. Der Suchbereich **ROI** kann dabei erfindungsgemäß entweder direkt in Abhängigkeit der Objektklasseninformation **101** und der Objektentfernungsinformation **102** bestimmt worden sein oder zusätzlich aus einer Information über den Objektwinkel aus der Objektwinkelmessung **302** mittels Bildverarbeitung, insbesondere bei erstmaliger Detektion des Objekts **601** im Kamerabild **600** bzw. im vergrößerten Suchbereich **ROI** mittels Bildverarbeitung.

### Bezeichnungsliste

| | |
|---|---|
| 100 | Objekterfassungseinrichtung |
| 101 | Objektklasseninformation |
| 102 | Objektentfernungsinformation |
| 200 | Transformation |
| ROI | Suchbereich (Region-Of-Interest) |
| 300 | Fahrzeugkamera |
| 301 | Objektvalidierung |
| 302 | Objektwinkelmessung |
| 400 | Zielobjektinformation (Track) |
| 500 | Weiterverarbeitung |
| 600 | Kamerabild einer Fahrzeugumgebung |
| 601 | Objekt |
| 602 | vertikale Ausdehnung des Suchbereichs |
| 603 | horizontale Ausdehnung des Suchbereichs |

### Patentansprüche

1.   **Verfahren zur Objektdetektion** mittels Bildverarbeitung in mittels wenigstens einer Fahrzeugkamera (300) erfassten Bildern (600) einer Fahrzeugumgebung, bei dem

- ein Objekt (601) und dessen Position mittels einer Objekterfassungseinrichtung (100) erfasst werden,
- in Abhängigkeit des erfassten Objekts (601) und dessen Position vorab ein Suchbereich (ROI) in den erfassten Bildern (600) bestimmt wird und
- die Objektdetektion mittels Bildverarbeitung innerhalb des Suchbereichs (ROI) in den erfassten Bildern (600) erfolgt,

**dadurch gekennzeichnet, dass**

- bei der Erfassung des Objekts (601) und dessen Position eine Objektentfernungsinformation (102) mittels der Objekterfassungseinrichtung (100) erfasst wird,

a) es sich bei der zumindest einen Objekterfassungseinrichtung (100) um eine transponderbasierte Objekterfassungs einrichtung handelt,
b) mittels der eine Objektentfernung ermittelt wird,
c) die Bestimmung des Suchbereichs (ROI) in Abhängigkeit der transponderbasierten Objektentfernungsinformation (102) erfolgt, wobei

d) zunächst in Abhängigkeit der transponderbasierten Objektentfernungsinformation (102) die Bestimmung eines vergrößerten Suchbereichs (ROI) erfolgt und

e) der Suchbereich **(ROI)** verkleinert, insbesondere dessen horizontale Ausdehnung **(603)** eingegrenzt wird,

f) indem aus der Objektdetektion mittels Bildverarbeitung innerhalb des Suchbereichs (ROI) in den erfassten Bildern (600) eine Objektwinkelinformation gewonnen wird und in Abhängigkeit dieser Objektwinkelinformation eine Anpassung des Suchbereichs (ROI) erfolgt.

**2.** Verfahren nach Anspruch 1, **dadurch gekennzeichnet, dass**

- bei der Erfassung des Objekt (601) und dessen Position zusätzlich eine Objektklasseninformation (101) mittels der transponderbasierten Objekterfassungseinrichtung (100) erfasst wird und
- die Bestimmung des Suchbereichs (ROI) in Abhängigkeit der Objektentfernungsinformation (102) und in Abhängigkeit der transponderbasierten Objektklasseninformation (101) erfolgt.

**3.** Verfahren nach Anspruch 2, **dadurch gekennzeichnet, dass** die Objektklasseninformation (101), Objektentfernungsinformation (102) und Objektwinkelinformation zu einer Zielobjektinformation (400) fusioniert werden, insbesondere zur Objektverfolgung und/oder zur Objektprädikation.

**4.** Verfahren nach einem der vorangegangenen Ansprüche, **dadurch gekennzeichnet, dass** die Objektdetektion mittels Bildverarbeitung innerhalb des Suchbereichs (ROI) eine Objektvalidierung (301) umfasst.

**5.** Verfahren nach einem der vorangegangenen Ansprüche, **dadurch gekennzeichnet, dass** für die Objektdetektion innerhalb des Suchbereichs (ROI) bzw. innerhalb des erweiterten Suchbereichs (ROI) ein Detektionsfenster vorgesehen ist, wobei die Objektdetektion innerhalb des Detektionsfensters erfolgt und wobei das Detektionsfenster mit einem definierten Pixelversatz im Suchbereich (ROI) bzw. im erweiterten Suchbereich (ROI) bewegt wird.

**6.** **Vorrichtung** zur Durchführung einer Objektdetektion in einer Fahrzeugumgebung gemäß einem Verfahren nach einem der vorangegangenen Ansprüche, umfassend

- zumindest eine Objekterfassungseinrichtung (100) zur Erfassung einer Objektentfernungsinformation (102) eines Objekts (601),
- zumindest eine Fahrzeugkamera (300) zur Erfassung von Bildern (600) aus einer Fahrzeugumgebung und
- Bildverarbeitungseinrichtungen zur Objektdetektion in den erfassten Bildern (600) der Fahrzeugumgebung.

**dadurch gekennzeichnet, dass**

a) es sich bei der zumindest einen Objekterfassungseinrichtung (100) um eine transponderbasierte Objekterfassungs einrichtung handelt,

b) mittels der eine Objektentfernung ermittelt wird,

c) die Bestimmung des Suchbereichs (ROI) in Abhängigkeit der transponderbasierten Objektentfernungsinformation (102) erfolgt, wobei

d) zunächst in Abhängigkeit der transponderbasierten Objektentfernungsinformation (102) die Bestimmung eines vergrößerten Suchbereichs (ROI) erfolgt und

e) der Suchbereich **(ROI)** verkleinert, insbesondere dessen horizontale Ausdehnung **(603)** eingegrenzt wird,

f) indem aus der Objektdetektion mittels Bildverarbeitung innerhalb des Suchbereichs (ROI) in den erfassten Bildern (600) eine Objektwinkelinformation gewonnen wird und in Abhängigkeit dieser Objektwinkelinformation eine Anpassung des Suchbereichs (ROI) erfolgt.

## Claims

**1.** **A method for detecting objects** by means of image processing in images (600) of a vehicle environment captured by means of at least one vehicle camera (300), in which method

- an object (601) and the position thereof are detected by means of an object-detection device (100),
- depending on the object (601) detected and the position thereof first of all a search area (ROI) is determined in the captured images (600), and
- the object detection is effected by means of image processing within the search area (ROI) in the detected images (600),

**characterized in that**

- during the detection of the object (601) and the position thereof object distance information (102) is captured by means of the object-detection device (100),

a) the at least one object-detection device (100) is a transponder-based object-detection device,
b) by means of which an object distance is established,
c) the search area (ROI) is determined depending on the transponder-based object distance information (102), wherein
d) depending on the transponder-based object distance information (102) an enlarged search area (ROI) is first determined, and
e) the search area **(ROI)** is reduced, in particular the horizontal extent **(603)** thereof is limited,
f) **in that** object angle information is acquired from the object detection by means of image processing within the search area (ROI) in the captured images (600) and, depending on said object angle information, the search area (ROI) is adjusted.

2. The method according to Claim 1, **characterized in that**

- during the detection of the object (601) and the position thereof object class information (101) is additionally captured by means of the transponder-based object-detection device (100), and
- the search area (ROI) is determined depending on the object distance information (102) and depending on the transponder-based object class information (101).

3. The method according to Claim 2, **characterized in that** the object class information (101), object distance information (102) and object angle information are merged to produce target object information (400), in particular to track objects and/or to predicate objects.

4. The method according to any one of the preceding claims, **characterized in that** the object detection by means of image processing within the search area (ROI) includes object validation (301).

5. The method according to any one of the preceding claims, **characterized in that** a detection window is provided for the object detection within the search area (ROI) and/or within the extended search area (ROI), wherein the object detection is effected within the detection window and wherein the detection window is moved by a defined pixel skew in the search area (ROI) and/or in the extended search area (ROI).

6. **A device** for carrying out object detection in a vehicle environment in accordance with a method according to any one of the preceding claims, including

- at least one object-detection device (100) for capturing object distance information (102) of an object (601),
- at least one vehicle camera (300) for capturing images (600) from a vehicle environment, and
- image processing devices for detecting objects in the captured images (600) of the vehicle environment,

**characterized in that**

a) the at least one object-detection device (100) is a transponder-based object-detection device,
b) by means of which an object distance is established,
c) the search area (ROI) is determined depending on the transponder-based object distance information (102), wherein
d) depending on the transponder-based object distance information (102) an enlarged search area (ROI) is first determined, and
e) the search area **(ROI)** is reduced, in particular the horizontal extent (603) thereof is limited,
f) **in that** object angle information is acquired from the object detection by means of image processing within the search area (ROI) in the captured images (600) and, depending on said object angle information, the search area (ROI) is adjusted.

**Revendications**

1. **Procédé de détection d'objets** au moyen d'un traitement d'image dans des images (600) d'un environnement de véhicule acquises au moyen d'au moins une caméra de véhicule (300), dans lequel

   - un objet (601) et sa position sont acquis au moyen d'un dispositif d'acquisition d'objet (100),
   - en fonction de l'objet (601) acquis et de sa position, une zone de recherche (ROI) est définie préalablement dans les images (600) acquises,
   - la détection d'objet s'effectue au moyen d'un traitement d'image à l'intérieur de la zone de recherche (ROI) dans les images (600) acquises,

   **caractérisé en ce que**

   - lors de l'acquisition de l'objet (601) et de sa position, une information d'éloignement de l'objet (102) est acquise au moyen du dispositif d'acquisition d'objet (100),

      a) concernant le dispositif d'acquisition d'objet (100) au moins au nombre de un, il s'agit d'un dispositif d'acquisition d'objet basé sur un transpondeur,
      b) au moyen duquel un éloignement de l'objet est déterminé,
      c) la définition de la zone de recherche (ROI) s'effectue en fonction de l'information d'éloignement de l'objet (102) basée sur un transpondeur,
      d) la définition d'une zone de recherche (ROI) agrandie s'effectue d'abord en fonction de l'information d'éloignement de l'objet (102) basée sur un transpondeur et
      e) la zone de recherche **(ROI)** est réduite, en particulier son étendue horizontale **(603)** est délimitée,
      f) par le fait qu'une information angulaire d'objet est acquise à partir de la détection d'objet au moyen d'un traitement d'image à l'intérieur de la zone de recherche (ROI) dans les images (600) acquises, et une adaptation de la zone de recherche (ROI) s'effectue en fonction de cette information angulaire d'objet.

2. Procédé selon la revendication 1, **caractérisé en ce que**,

   - lors de l'acquisition de l'objet (601) et de sa position, une information de classe d'objet (101) s'effectue à titre supplémentaire au moyen du dispositif d'acquisition d'objet (100) basé sur un transpondeur et
   - la définition de la zone de recherche (ROI) s'effectue en fonction de l'information d'éloignement de l'objet (102) et en fonction de l'information de classe d'objet (101) basée sur un transpondeur.

3. Procédé selon la revendication 2, **caractérisé en ce que**
   l'information de classe d'objet (101),
   l'information d'éloignement de l'objet (102) et
   l'information angulaire d'objet sont fusionnées en une information d'objet cible (400), en particulier en un suivi d'objet et/ou en une prédiction d'objet.

4. Procédé selon l'une des revendications précédentes,
   **caractérisé en ce que**
   la détection d'objet au moyen d'un traitement d'image à l'intérieur de la zone de recherche (ROI) comprend une validation d'objet (301).

5. Procédé selon l'une des revendications précédentes,
   **caractérisé en ce que**,
   pour la détection d'objet à l'intérieur de la zone de recherche (ROI) ou respectivement à l'intérieur de la zone de recherche (ROI) agrandie, il est prévu une fenêtre de détection, la détection d'objet s'effectuant à l'intérieur de la fenêtre de détection, et la fenêtre de détection étant déplacée avec un décalage de pixel défini dans la zone de recherche (ROI) ou respectivement dans la zone de recherche (ROI) agrandie.

6. **Dispositif** destiné à la réalisation d'une détection d'objet dans un environnement de véhicule selon un procédé selon l'une des revendications précédentes, comprenant

- au moins un dispositif d'acquisition d'objet (100) pour l'acquisition d'une information d'éloignement de l'objet (102) d'un objet (601),
- au moins une caméra de véhicule (300) pour l'acquisition d'images (600) à partir d'un environnement de véhicule et
- des dispositifs de traitement d'image pour la détection d'objet dans les images (600) acquises de l'environnement de véhicule,

**caractérisé en ce que**

a) concernant le dispositif d'acquisition d'objet (100) au moins au nombre de un, il s'agit d'un dispositif d'acquisition d'objet basé sur un transpondeur,

b) au moyen duquel un éloignement de l'objet est déterminé,

c) la définition de la zone de recherche (ROI) s'effectue en fonction de l'information d'éloignement de l'objet (102) basée sur un transpondeur,

d) la définition d'une zone de recherche (ROI) agrandie s'effectue d'abord en fonction de l'information d'éloignement de l'objet (102) basée sur un transpondeur et

e) la zone de recherche **(ROI)** est réduite, en particulier son étendue horizontale **(603)** est délimitée,

f) par le fait qu'une information angulaire d'objet est acquise à partir de la détection d'objet au moyen d'un traitement d'image à l'intérieur de la zone de recherche (ROI) dans les images (600) acquises, et une adaptation de la zone de recherche (ROI) s'effectue en fonction de cette information angulaire d'objet.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1179803 B1
- EP 2161677 A
- US 20100007476 A1
- WO 2006015894 A1
- US 6452535 B